# EUROPEAN PATENT SPECIFICATION

(11) **EP 2 499 190 B1**
(45) Date of publication and mention of the grant of the patent: **06.11.2013**
(21) Application number: 10779181.6
(22) Date of filing: 10.11.2010
(51) Int. Cl.: C08J 5/18, C08G 63/00

(54) **METHOD FOR MAKING POLYLACTIDE FILMS**
HERSTELLUNGSVERFAHREN FÜR POLYLACTID-FILME
PROCÉDÉ DE PRÉPARATION POUR DES FILMES POLYLACTIDES

(30) Priority: 10.11.2009 US 259700 P
(43) Date of publication of application: 19.09.2012
(73) Proprietor: 3M Innovative Properties Company, Saint Paul, MN 55133-3427 (US)
(72) Inventor: AUSEN, Ronald W., Saint Paul, Minnesota 55133-3427 (US); MYERS, Sasha B., Saint Paul, Minnesota 55133-3427 (US); JENNEN, Jay M., Saint Paul, Minnesota 55133-3427 (US); KORBA, Gary A., Saint Paul, Minnesota 55133-3427 (US); BANY, Stephen W., Saint Paul, Minnesota 55133-3427 (US)
(74) Representative: Herzog, Fiesser & Partner
(86) International application number: PCT/US2010/056115
(87) International publication number: WO 2011/060001

(56) References cited:
- WO-A1-2010/078134
- WO-A2-2008/057214
- DE-A1- 19 829 936
- US-A1- 2005 206 048
- DATABASE WPI Week 200064 Thomson Scientific, London, GB; AN 2000-662605 XP002622769, & NL 1 011 404 C2 (CORUS TECHNOLOGY BV) 29 August 2000 (2000-08-29)
- DATABASE WPI Week 200235 Thomson Scientific, London, GB; AN 2002-308731 XP002622770, & JP 2001 276727 A (SUMITOMO BAKELITE CO LTD) 9 October 2001 (2001-10-09)
- DATABASE WPI Week 198345 Thomson Scientific, London, GB; AN 1983-812376 XP002622771, & JP 58 168522 A (IDEMITSU PETROCHEM CO) 4 October 1983 (1983-10-04)

## Description

The present invention relates to novel methods for making polylactide films from a molten polylactide composition.

### Background

Renewable polymers are derived from natural or biomass materials. Renewable, degradable polymers are of interest because of a desire to address issues presented by the use of petroleum-based polymers such as waste management, availability, and cost. There is a long-felt need for renewable, degradable polymer films suitable for use in any of a variety of products

A commercially available, renewable, and degradable polymer is that produced from the polymerization of lactic acid or lactide. Lactic acid is obtained by the bacterial fermentation of corn starch or cane sugar. But, lactic acid cannot be directly polymerized to a useful product because the polymerization reaction generates water, the presence of which degrades the formation of the polymer chain, resulting in low molecular weights. To avoid this problem, lactic acid is typically converted to the cyclic lactide monomer which is more readily polymerized into polymers having a wide range of molecular weights. The resulting polymer material is typically referred to as "polylactic acid," "polylactide" or "PLA."

PLA has high surface energy, and PLA films are normally smooth with a high gloss surface finish. Matte-finished film produced from amorphous PLA does not retain its surface structure and will become smooth and shiny when heated above its glass transition temperature (Tg). PLA has a slow rate of crystallization which is an impediment to its rapid processing into continuous films. Plasticizers and nucleating agents can be added to a PLA composition to increase its rate of crystallization. However, when PLA is extruded onto a quenching tool roll above 65°C, the resulting PLA film will often stick to the roll, thus complicating the processing of such films. Although the art has recommended that PLA films be produced using a quenching temperature of 65°C or less, this temperature makes it very difficult to form films having desired surface structures because the relatively low quenching temperatures speed the film formation process but often fail to allow time for the molten PLA to adequately flow into the structure-imparting cavities of the tool's molding. Lower quenching temperatures can also prevent sufficient crystallization of the PLA film.

### Summary

There remains a need for rapid, cost effective methods for the manufacture of crystallized PLA films, and the present invention addresses that need.

In one aspect, the present invention provides a method for forming a polylactide film comprising the steps of:
(a) providing a treated tool surface comprising a surface of a quench roll and a release coating, the treated tool surface being at a predetermined temperature of about the glass transition temperature of the polylactide or higher;
(b) extruding a molten polylactide composition onto the treated tool surface to create a polylactide film, the film being at least partially crystalline, and wherein the crystallinity of the polylactide film is enhanced due to exposure of the molten polylactide composition to the treated tool surface at the predetermined temperature; and
(c) removing the polylactide film from the treated tool surface.

In another aspect, the invention provides a film made by the foregoing method. In another aspect the invention provides an article comprising the foregoing film. In still another aspect, the article is a disposable garment such as a diaper.

In still another aspect, the invention provides a tape comprising the foregoing film, the film having first and second major surfaces and a layer of adhesive on at least one of the first or second major surfaces.

As used herein, the various terms used to describe the embodiments of the invention are to be construed according to their normal use, as understood by those of ordinary skill in the art. However, certain terms are defined for clarity.

The terms "comprise," "comprises" and variations thereof do not have a limiting meaning where these terms appear in the description and claims.

As used herein, "a," "an," "the," "at least one," and "one or more" are used interchangeably. Thus, for example, a composition comprising "a" nucleating agent can be interpreted to mean that the composition includes "one or more" nucleating agents.

Similarly, a composition comprising "a" plasticizer can be interpreted to mean that the composition includes "one or more" plasticizers.

As used herein, the term "or" is generally employed in its sense including "and/or" unless the content clearly dictates otherwise. The term "and/or" means one or all of the listed elements or a combination of any two or more of the listed elements.

It will be understood that any recitation herein of numerical ranges by endpoints include all numbers subsumed within the recited range (e.g., 1 to 5 includes 1, 1.5, 2, 2.75, 3, 3.80, 4, 5, etc.). Also, a numerical range that includes "up to" a certain value will be understood to include that value.

The foregoing summary is not intended to describe every possible embodiment or implementation of the present invention. Those of ordinary skill in the art will gain a better understanding of the invention upon review of the remaining sections herein, including the Detailed Description with the accompanying Figures, the non-limiting Examples and the appended claims.

### Brief Description of the Figures

In describing embodiments of the present invention herein, reference is made to the Figure which is provided to facilitate an understanding of the described embodiments but which is not necessarily to scale. Components and structures of the described embodiments are identified in the Figure using reference numbers, wherein like components / structures are identified with like numbers and wherein:

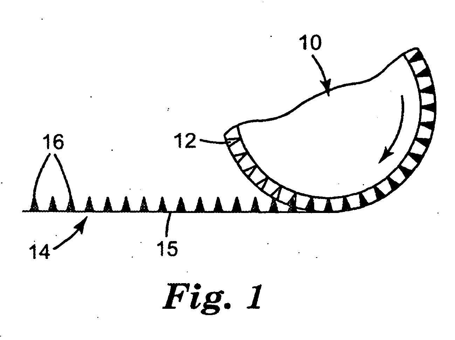

Figure 1 is schematic of a portion of a tool roll having a structured surface and a film formed thereon.

### Detailed Description

Polylactide is a renewable polymeric material. The described embodiments of the invention provide methods of making polylactide-containing films ("PLA films") that include crystalline polylactide. PLA films with increased crystallinity generally degrade more slowly than amorphous PLA films under conditions of high humidity and heat. Hence, the presence of crystalline PLA contributes to temperature and age stability, as well as other desirable properties for structured films (e.g., films having a structured surface).

Lactic acid has two optical isomers, L-lactic acid, also known as (S)-lactic acid, and D-lactic acid, also known as (R)-lactic acid. Due to the chiral nature of lactic acid, several distinct forms of polylactide exist: L,L-lactide, also known as L-lactide, which comprises two (S)-lactic acid residuals; D,D-lactide, also known as D-lactide, which comprises two (R)-lactic acid residuals; and meso-lactide, which comprises one each of (R)- and (S)-lactic acid residuals. Polymerization of a racemic mixture of L- and D-lactides usually leads to the synthesis of poly-DL-lactide, which is not crystalline but amorphous. Although using certain catalysts during polymerization and/or controlling the ratio of D to L enantiomers can influence the crystallization kinetics of PLA, additives (e.g., nucleating agents) and processing parameters also impact the level of crystallinity and the rate of crystallization.

In particular embodiments of the invention, a method for forming a PLA film is provided that results in a useable PLA film having suitable crystallinity for various applications. Such a method comprises (a) providing a treated tool surface at a predetermined temperature; (b) contacting the treated tool surface with a molten polylactide composition to create a polylactide film, the film being at least partially crystalline; and (c) removing the polylactide film from the treated tool surface. In the various embodiments, the crystallinity of the polylactide film is enhanced due to exposure of the polylactide composition to the treated tool surface at a predetermined temperature that is typically higher than the glass transition temperature of the polylactide.

In performing the steps of the foregoing method, step (a) involves providing a treated tool surface. As used herein, "treated tool surface" refers to a film-forming surface on a tool (the surface of a quench roll) wherein the surface has been treated with a release agent to form a release coating on the surface. Hence, providing a treated tool surface can first involve the application of a release agent to an untreated tool surface. In some embodiments, the release coating is in the form of a substantially continuous monolayer film on the tool surface. As used herein, "substantially continuous monolayer film" refers to a film in which individual molecules of the film are packed as densely as their molecular structures allow. In the embodiments of the invention, such a treated tool surface typically will not significantly degrade or delaminate during use. In some embodiments, the tool surface includes a plurality of die cavities. In some embodiments, the die cavities are extremely small (e.g., from about 0.001 to about 1.0 mm in diameter) so that the tool surface is a negative surface suitable to form a structure when a molten material is applied to the surface. Upon application of a surface treatment as described herein, the tool surface is a treated negative surface.

In some embodiments, the release agent is selected from one or more fluorochemical benzotriazoles, one or more fluorinated phosphonic acids and combinations of two or more of the foregoing. Suitable release agents include those disclosed in U.S. Patent No. 6,376,065 B1 (Korba et al.) and U.S. Patent No. 6,824,882 B2 (Boardman et al.).

Fluorochemical benzotriazoles suitable for use in embodiments of the invention include those capable of forming a substantially continuous monolayer film. Exemplary fluorochemical benzotriazoles are those having the formula (I): 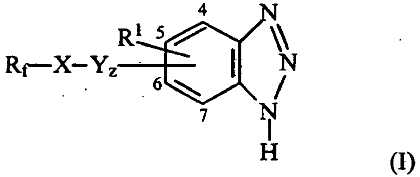 wherein
R_{f} is Cₙ F₂ₙ₊₁ -(CH₂)ₘ-, wherein n is 1 to 22 and m is an integer of 0 or higher;
X is -CO₂-, -SO₃-, -CONH-, -O-, -S- a covalent bond, -SO₂NR-, or -NR-, wherein R is H or C₁ to C₅ alkylene;
Y is -CH₂- wherein z is 0 or 1; and
R¹ is H, lower alkyl or R_{f}-X-Y_{z}-
with the provisos that when X is -S-, or -O-, m is 0, and z is 0, n is ≥ 7 and when X is a covalent bond, m or z is at least 1.

In certain embodiments, the release agent is a fluorochemical benzotriazole of the above formula (I) wherein "m" is 6.

In addition to the fluorochemical benzotriazoles of formula (I), fluorochemical benzotriazoles suitable for use in embodiments of the invention include those having the formula (II): 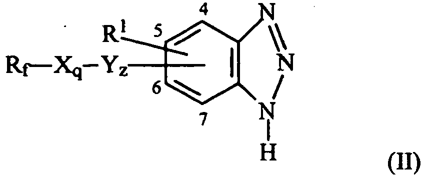 wherein
R_{f} is Cₙ F₂ₙ₊₁ -(CH₂)ₘ-, n is 1 to 22, m is an integer of 0 or higher;
X is -CO₂-, -SO₃-, -S-, -O-, -CONH-, a covalent bond, -SO₂NR-, or -NR-, wherein R is H or C₁ to C₅ alkylene, and q is 0 or 1;
Y is C₁ - C₄ alkylene, and z is 0 or 1; and
R¹ is H, lower alkyl, or R_{f}-X-Y_{z}.

In certain embodiments, a suitable release agent is a fluorochemical benzotriazole of the above formula (II) wherein "m" is 6.

Fluorinated phosphonic acids suitable for use in embodiments of the invention include those having the formula (III): 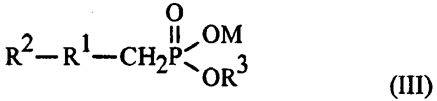 wherein:
R¹ is a straight chain alkylene group having from 5 to 21 carbon atoms, wherein a methylene moiety may be replaced by an oxygen atom at a single site, or at multiple sites along the methylene chain;
R² is a perfluoroalkyl group having from 4 to 10 carbon atoms;
R³ is hydrogen, an alkali metal cation, or an alkyl group having from 1 to 6 carbon atoms; and
M is hydrogen or an alkali metal cation,
with the proviso that if R¹ is an unsubstituted straight chain alkylene group, then the sum of carbon atoms in R¹ and R² combined is at least 10.

In some embodiments, the release agent is a fluorinated phosphonic acid of formula (III) wherein R¹ is a straight chain alkylene group having from about 10 to about 21 carbon atoms. In some embodiments, R¹ is decane-1,10-diyl or heneicosane-1,21-diyl.

In specific embodiments, a suitable fluorinated phosphonic acid has a composition selected from the group consisting of CF₃(CF₂)₃(CH₂)₈PO₃H₂, CF₃(CF₂)₃(CH₂)₁₁PO₃H₂, CF₃(CF₂)₃(CH₂)₂₂PO₃H₂ and combinations of two or more of the foregoing.

Without intending to be bound thereby, it is theorized that release agents of the foregoing formulas (I), (II) and (III), when coated on a tool surface, will self assemble to form a monolayer on the surface of the tool. The resulting treated tool surface comprises a release coating that is a substantially continuous monolayer film in the form of a self assembled monolayer of one of the foregoing fluorochemical benzotriazoles or fluorinated phosphonic acids. Self-assembled monolayers of fluorochemical benzotriazoles are believed to form layers in which the triazole groups attach to available areas of the metal or metalloid surface of the tool while pendant fluorocarbon tails align to extend away from the tool surface substantially towards the external interface. Fluorinated phosphonic acids are believed to form self-assembled monolayers with the phosphono groups contacting the metal or metalloid surface of the tool and the perfluoroalkyl groups extending away from the tool surface and substantially towards the external interface.

The self-assembled monolayer is a substantially continuous monolayer film which, in some embodiments, is tenaciously bonded to the surface of the tool so that the release coating is durable and will not delaminate as PLA film is formed on the treated tool surface and is removed therefrom.

A self-assembled substantially continuous monolayer film may be formed by contacting a tool surface with an amount of the self-assembling release agent (e.g., fluorochemical benzotriazoles, fluorinated phosphonic acids) in an amount sufficient to coat the entire tool surface. Prior to its application to a tool surface, the self-assembling release agent may be dissolved in a suitable solvent which is allowed to evaporate after being applied to the tool. Suitable solvents for the self-assembling release agents herein include, for example, ethanol, isopropyl alcohol, ethyl acetate, water, acetone and combinations of two or more of the foregoing. Release agent may be applied to the tool surface by conventional coating methods such as spraying, wiping, dip coating, spin coating or the like. In various embodiments, the tool surface is a metallic surface capable of bonding to the release agent to form a substantially continuous monolayer film. Suitable metal surfaces include, for example, those comprising aluminum, copper, nickel, chromium, titanium, zinc, silver, germanium and alloys and mixtures of the foregoing.

In performing step (b) the treated tool surface is contacted with a molten polylactide composition to create a polylactide film that is at least partially crystalline. Partial crystallinity is imparted to the polylactide film when the aforementioned self-assembling release agents are used. In such embodiments, the molten polylactide composition may be formulated without including added nucleating agent(s). However, in other embodiments, conventional nucleating agent(s) may optionally be incorporated into the molten composition to possibly further enhance the crystallinity of the resulting PLA film.

In the preparation of a molten polylactide composition, suitable sources of the polylactide include commercial sources. Exemplary commercially available polylactide resins suitable for extrusion or thermoforming are available from NatureWorks LLC, Minnetonka, MN. Other commercially available PLA resins include film-grade, sheet-grade, nonwoven-grade, or injection molding-grade materials.

Molten polylactide compositions of the present invention can include one or more plasticizers which are retained in the resulting polylactide films. Plasticizers can improve the film properties of the PLA (e.g., flexibility, impact, tear resistance), and are typically used to reduce the glass transition temperature (T_{g}) of the composition. Exemplary plasticizers lower the T_{g} of the polylactide composition by greater than about 5°C, and in some embodiments by about 20°C to about 30°C.

In some embodiments, a plasticizing agent (i.e., plasticizer) for use in a renewable film should itself be renewable while also being compatible with the resin. Exemplary plasticizers may also be relatively nonvolatile. Suitable plasticizing agents for use herein include those disclosed, for example, in U.S. Patent No. 6,121,410; Japanese Patent JP 2007-130893, and U.S. Patent Publication 2007/4160782.

Examples of suitable plasticizers include those in the general classes of alkyl or aliphatic esters, ethers, and multi-functional esters and/or ethers. These include alkyl phosphate esters, dialkylether diesters, tricarboxylic esters, epoxidized oils and esters, polyesters, polyglycol diesters, alkyl alkylether diesters, aliphatic diesters, alkylether monoesters, citrate esters, dicarboxylic esters, vegetable oils and their derivatives, and esters of glycerine. In some embodiments, suitable plasticizers are tricarboxylic esters, citrate esters, esters of glycerine and dicarboxylic esters. For example, appropriate character is exhibited by triethyl citrate, acetyl triethyl citrate, tri-n-butyl citrate, acetyl tri-n-butyl citrate, acetyl tri-n-hexyl citrate, n-butyl tri-n-hexyl citrate and dioctyl adipate. Appropriate compatibility is exhibited by acetyl tri-n-butyl citrate and dioctyl adipate. Other compatible plasticizers include any plasticizers or combination of plasticizers which can be blended with polylactide and are either miscible with polylactide or which form a mechanically stable blend.

Volatility is determined by the vapor pressure of the plasticizer. An appropriate plasticizer is sufficiently nonvolatile such that the plasticizer stays substantially in the resin formulation throughout the process needed to produce the film. Excessive volatility can lead to fouling of process equipment, which is observed when producing films by melt processing polylactide with a high lactide content. Useful plasticizers can have a vapor pressure of less than about 10 mm Hg at 170°C, or less than about 10 mm Hg at 200°C.

Internal plasticizers, which are bonded to the polylactide, may also be useful. Epoxides provide one method of introducing an internal plasticizer.

A plasticizer is useful at levels of at least 5 wt-%, based on the total weight of the molten PLA composition. Typically, a plasticizer is used at a level of at least 10 wt-%, or at least 15 wt-%, based on the total weight of the molten PLA composition. A plasticizer is useful at levels of no greater than 30 wt-%, based on the total weight of the molten PLA composition. Some plasticizers are used at a level of no greater than 20 wt-%, based on the total weight of the molten PLA composition.

Nucleating agent(s) are often used in the art to provide a heterogeneous surface on which crystallization can begin. As previously mentioned, nucleating agents are optionally used in various embodiments of the invention. The use of self-assembling release agents to form a substantially continuous monolayer film has been shown to facilitate crystallization of the PLA. In some embodiments, however, it may be desirable to add one or more traditional nucleating agent(s) to the molten PLA composition in order to enhance crystallinity of a PLA product. When included in the molten PLA composition, nucleating agents may be selected from any of a variety of materials selected from those comprising inorganic materials or organic materials. Some suitable nucleating agents are disclosed, for example, in U.S. Pat. No. 6,121,410, JP 2007-130893, and U.S. Pat. Publ. 2007/0160782. In various embodiments, nucleating agents may include selected plasticizers, finely divided minerals, organic compounds, salts of organic acids and imides and finely divided crystalline polymers with a melting point above the processing temperature of the polylactide.

Additional examples of useful nucleating agents include, for example, talc, zinc oxide, sodium salt of saccharin, calcium silicate, calcium titanate, boron nitride, copper phthalocyanine, phthalocyanine and the like. Suitable inorganic nucleating agents include those having an average particle size of at least 25 nanometers, or at least 0.1 micron. In some embodiments, suitable inorganic nucleating agents have an average particle size of no greater than 10 microns.

If used in the PLA compositions of the invention, nucleating agent is useful at levels of at least about 0.1 wt-%, based on the total weight of the molten PLA composition. In some embodiments, nucleating agent is at a level of at least about 0.5 wt-%, at least about 1.0 wt-%, and at least about 2.0 wt-%, based on the total weight of the molten PLA composition.

In accordance with method step (c) herein, molten PLA composition is applied to the treated tool surface at a predetermined temperature to cool the composition below its melting temperature and above its glass transition temperature and thereby form a PLA film. The PLA film may then be removed from the treated tool surface. The polylactide film will be at least partially crystalline and the crystallinity of the film is enhanced due to its formation on the treated tool surface.

Referring to Figure **1****,** a partial schematic of a treated tool in the form of quench roll **10** is provided to illustrate embodiments of the invention. In the depicted embodiment, roll **10** includes a structured surface **12** which is pretreated with a release coating as previously described. Molten PLA containing composition is brought in contact with the roll **10.** Prior to being formed into a film, a molten PLA composition is formulated by mixing ingredients that include PLA and plasticizer(s) and optional nucleating agent. The molten PLA composition is mixed by adding the ingredients to an extruder equipped with an appropriate die (e.g., a coat hanger sheet die). Other means for mixing the components of a molten PLA composition may be used by one of ordinary skill in the art and are also contemplated herein such as, for example, a blender, vacuum kneader, or the like. In some embodiments, a twin screw extruder is used which may include multiple heated zones. Each of the ingredients in the molten PLA composition may be added to the extruder using a feed hopper or one or more of the components may be introduced into the extruder through a port provided in one or more zones. It will be appreciated that different ingredients may be added at different ports in any of the various different zones, and each of the zones may be maintained at a temperature independent of the temperatures in the other zones. Moreover, the temperature in each zone may be the same as temperatures in other zones or they may each be different. The precise conditions under which the molten PLA composition is prepared, whether by extruder or other means, may be readily determined by a person of ordinary skill in the art.

Following mixing, the molten PLA composition is extruded and deposited onto the roll **10** through a film die **or the like to form a continuous film. In the depicted** embodiment, film **14** has an embossed, structured surface **16** comprising structure(s) in the form of a negative imprint of the structured surface **12.** The resultant film **14** is "continuous," in that the film is of an indefinite length. Stated another way, film **14** is much longer that it is wide (e.g., the length is at least 5 times the width, at least 10 times the width, or at least 15 times the width). In the various embodiments of the invention, structured surface **12** retains its structure even upon heating the film at a temperature of up to 130°C because, at least in part, to the crystallinity of the PLA. Thus, films formed according to the present invention are generally stable during storage and transportation.

It will be appreciated by those of ordinary skill in the art that the treated tool surface, while depicted as structured surface **12** in Figure 1, may be provided in alternative configurations. In some embodiments, the surface may be relatively smooth or unstructured. In some embodiments, it may be provided in a form suitable for the manufacture of PLA film having a gloss finish, a matte finish, or the like. The structure(s) on the structured surface of the tool roll can be in the form of a single continuous structure or pattern (e.g., a cross-hatched pattern) or multiple structures (e.g., cavities for forming hook stems). Structures are formed on the PLA film as a result of a negative imprint transferred from the treated tool surface to the PLA film. The treated tool surface can include random structures or a more structured machine finish. If desired, both surfaces of the PLA film can be made to include one or more structures.

In some embodiments, the treated tool surface **12** comprises a plurality of mold cavities of a predetermined shape that results in the formation of upstanding hook stems, or hook-like projections, for example, on the surface of the PLA film. In the manufacture of PLA films comprising such shapes, molten PLA composition is applied to the treated tool surface under conditions effective to fill the mold cavities, such conditions being readily determined by one of ordinary skill in the art based on the teachings herein.

In various embodiments of the invention, levels of crystallinity for the PLA films, on a weight basis, are at least about 1 percent by weight (wt-%), at least about 2 wt-%, at least about 5 wt-%, at least about 10 wt-% and at least about 20 wt-%. Typically, the films have no greater than about 40 wt-% crystallinity.

In the embodiments described herein, the treated tool surface is at a predetermined temperature above the glass transition temperature (T_{g}) of the polylactide-containing composition and below the melting temperature (T_{M}) of the polylactide. A typical commercially available PLA can have a T_{g} of approximately 58°C but can vary depending on the formulation of the molten polylactide composition. In some instances, the T_{g} can be as low as about 27°C to about 30°C. In some embodiments, the treated tool surface is at a predetermined temperature of at least about 85°C, at least about 100°C, or at least about 105°C. Similarly, although the melting temperature of a typical commercially available PLA is-about 160°C, this can vary depending on the formulation of the molten PLA composition. In certain embodiments, the treated tool surface is at a temperature of no greater than about 130°C. Such temperatures can enhance the rate of crystallization of the polylactide, enhance the filling of mold cavities, and further reduce sticking of the PLA film to the treated tool surface thereby enhancing processing speeds, for example. In some embodiments, the process uses a treated tool surface maintained at a temperature in the range from about 85°C to about 130°C, from about 100°C to about 130°C, or from about 105°C to about 130°C.

Pressure is normally applied to the molten PLA composition in the area where it contacts the treated tool surface, thus providing a nipped area. Determination of the appropriate amount of pressure to be applied is readily determined by one of ordinary skill in the art. Such pressure can affect the formation of the initial structures in the surface. Typically, the higher the temperature of the treated tool surface, the lower the pressure that may be required.

Equipment set-ups for preparing continuous films of the present invention are well-known to those of ordinary skill in the art. Some exemplary equipment set-ups are described in the non-limiting Examples herein. For example, a typical tool roll is made of steel, although other materials of the tool roll can include nickel- or chrome-plated steel.

Typically, a process of the present invention uses one major tool roll with a treated tool surface. Although other rolls may be used (e.g., a nip or back-up rubber or steel roll), a typical process does not require two rolls in sequence to cool and subsequently reheat the temperature of the composition or film. Thus, embodiments of the process of the invention are provided to form a film in one step, e.g., one major structure-forming step.

In various embodiments, the invention provides a process for the manufacture of PLA film having any of a variety of structures on one or both major surfaces thereof. Examples include a stemmed web that can be used to make a hook fastener (also referred to as a headed stem mechanical fastener), like those described in, for example, U.S. Patent Nos. 6,132,660, 6,039,911, 5,679,302, and 6,635,212. In other embodiments, a matte-finished film may be provided. The structures on an exemplary matte-finished film surface can have a Roughness average (Ra) of at least 1.25 microns.

In still other embodiments, the molten PLA composition can be formulated to contain PLA, and optionally, other polymers compatible with PLA. Typically, the polylactide includes less than 5 wt-% d-lactide, or less than 2 wt% d-lactide.

PLA films made according to an embodiment of the present invention can be used in a variety of products. For example, they can be used as hook and loop fasteners in the closure mechanism on disposable garments, such as diapers or hospital gowns, as the backsheet of a diaper, in tape (such as diaper tape), tape flags, lint removal tapes (e.g., in lint rollers), and in laminates of the films to other substrates such as nonwovens and paper. For example, a matte-finished PLA-containing film can be used in diapers (e.g., as the backsheet or tape backing), tapes, tape flags, and home care applications such as lint removal tapes. The matte-finished surface can be on one side of a matte-finished PLA film or on both sides if desired. The adhesive in a tape that uses a matte-finished film of the present invention as a backing can be disposed on the matte-finished surface or on the opposite (typically, smooth) surface.

In place of a hook and loop fastener system, such disposable garments can include adhesive fastening tabs (e.g., diaper tapes). Such tapes can include a PLA film, such as a matte-finished film, comprising a surface having a layer of adhesive thereon. Other tapes can be made using a PLA film backing made in accordance with the present invention and suitable for use in a wide variety of other applications, such as tape flags or the tape used in a lint removal sheets or rollers. A wide variety of adhesives can be used such as, for example, a tackified elastomer in the form of an A-B type block copolymer, or the like.

To further describe the various embodiments of the invention, it will be appreciated that a first method is provided for forming a polylactide film. The first method includes the steps (a)-(c), which encompass the following:
(a) providing a treated tool surface comprising a surface of a quench roll and a release coating, the treated tool surface being at a predetermined temperature of about the glass transition temperature of the polylactide or higher;
(b) extruding a molten polylactide composition onto the treated tool surface to create a polylactide film, the film being at least partially crystalline, and wherein the crystallinity of the polylactide film is enhanced due to exposure of the molten polylactide composition to the treated tool surface at the predetermined temperature; and
(c) removing the polylactide film from the treated tool surface.

A second method is provided that can be a version of the first method. In the second method, the step (a) of providing a treated tool surface also includes applying the release coating to a surface of an untreated tool.

A third method is provided that can be a version of the first or second methods. In the third method, the predetermined temperature of the treated tool surface is in the range from about 85°C to about 130°C.

A fourth method is provided that can be a version of any of the first to third methods. In the third method, the treated tool surface comprises the surface of a quench roll.

A fifth method is provided that can be a version of any of the first to fourth methods. In the fifth method, the release coating is a substantially continuous monolayer film.

A sixth method is provided that can be a version of any of the first to fifth methods. In the sixth method, the treated tool surface is a treated negative surface.

A seventh method is provided that can be a version of the sixth method. In the seventh method, contacting the treated tool surface with a molten polylactide composition creates a polylactide film having a structured surface.

An eighth method is provided that can be a version of any of the first to seventh methods. In the eighth method, the release coating is selected from a fluorochemical benzotriazole, a fluorinated phosphonic acid and combinations thereof.

A ninth method is provided that can be a version of any of the first to eighth methods. In the ninth method, the fluorochemical benzotriazole has the formula: 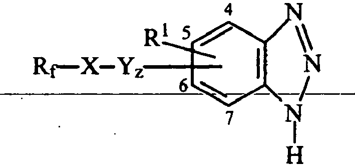 wherein
R_{f} is Cₙ F₂ₙ₊₁ -(CH₂)ₘ-, wherein n is 1 to 22 and m is an integer of 0 or higher;
X is -CO₂-, -SO₃-, -CONH-, -O-, -S- a covalent bond, -SO₂NR-, or -NR-, wherein R is H or C 1 to C₅ alkylene;
Y is -CH₂- wherein z is 0 or 1; and
R¹ is H, lower alkyl or R_{f}-X-Y_{z}-
with the provisos that when X is -S-, or -O-, m is 0, and z is 0, n is ≥ 7 and when X is a covalent bond, m or z is at least 1.

A tenth method is provided that can be a version of the ninth method. In the tenth method, "m" is 6.

An eleventh method is provided that can be a version of any of the first to eighth methods. In the eleventh method, the fluorochemical benzotriazole has the formula: 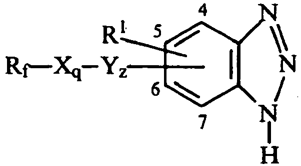 wherein
Rf is Cₙ F₂ₙ₊₁ -(CH₂)ₘ-, n is 1 to 22, m is an integer of 0 or higher;
X is -CO₂-, -SO₃-, -S-, -O-, -CONH-, a covalent bond, -SO₂NR-, or -NR-, wherein R is H or C₁ to C₅ alkylene, and q is 0 or 1;
Y is C₁ - C₄ alkylene, and z is 0 or 1; and
R¹ is H, lower alkyl, or R_{f}-X-Y_{z}.

A twelfth method is provided that can be a version of the eleventh method. In the twelfth method, "m" is 6. twelfth "m" is

A thirteenth method is provided that can be a version of any of the first to eighth method. In the thirteenth method, the fluorinated phosphonic acid has the formula: 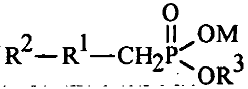 wherein:
R¹ is a straight chain alkylene group having from 5 to 21 carbon atoms, wherein a methylene moiety may be replaced by an oxygen atom at a single site, or at multiple sites along the methylene chain;
R² is a perfluoroalkyl group having from 4 to 10 carbon atoms;
R³ is hydrogen; an alkali metal cation, or an alkyl group having from 1 to 6 carbon atoms; and
M is hydrogen or an alkali metal cation,
with the proviso that if R¹ is an unsubstituted straight chain alkylene group, then the sum of carbon atoms in R¹ and R² combined is at least 10.

A fourteenth method is provided that can be a version of the thirteenth method. In the fourteenth method, R¹ is a straight chain alkylene group having front about 10 to about 21 carbon atoms.

A fifteenth method is provided that can be a version of the thirteenth or fourteenth methods. In the fifteenth method, R¹ is decane-1,10-diyl or heneicosane-1,21-diyl.

A sixteenth method is provided that can be a version of any of the first to eighth method. In the sixteenth method, the fluorinated phosphonic acid is selected from the following group CF₃(CF₂)₃(CH₂)₈PO₃H₂, CF₃(CF₂)₃(CH₂)₁₁PO₃H₂, CF₃(CF₂)₃(CH₂)₂₂PO₃H₂.

A seventeenth method is provided that can be a version of the first to sixteenth methods. In the seventeenth method, the molten polylactide composition includes no nucleating agent.

An eighteenth method is provided that can be a version of the first to sixteenth methods. In the eighteenth method, the molten polylactide composition includes at least one nucleating agent.

A nineteenth method is provided that can be a version of the eighteenth method. In the nineteenth method, the at least one nucleating agent is selected from talc, zinc oxide, sodium salt of saccharin, calcium silicate, sodium benzoate, calcium titanate, boron nitride, copper phthalocyanine, phthalocyanine and combinations of two or more of the foregoing.

A twentieth method is provided that can be a version of the first to nineteenth methods. In the twentieth method, the molten polylactide composition includes at least one plasticizer selected from alkyl phosphate esters, dialkylether diesters, tricarboxylic esters, epoxidized oils and esters, polyesters, polyglycol diesters, alkyl alkylether diesters, aliphatic diesters, alkyl ether monoesters, citrate esters, dicarboxylic esters, vegetable oils and their derivatives, esters of glycerin and combinations of two or more of the foregoing.

A twenty first method is provided that can be a version of the first to twentieth methods. In the twenty first method, the method can further include preparing the molten polylactide composition in an extruder, so that step (b) of contacting the treated tool surface with the molten polylactide composition includes extruding the molten polylactide composition through a die and onto the treated tool surface to create the polylactide film.

A twenty second method is provided that can be a version of the first to the twenty first methods. In the twenty second method, the polylactide film includes polylactide having at least 1 wt-% crystallinity.

A twenty third method is provided that can be a version of the first to the twenty second methods. In the twenty third method, the polylactide film comprises polylactide having no greater than 40 wt-% crystallinity.

A twenty fourth method is provided that can be a version of the first to twenty third methods. In the twenty fourth method, the treated tool surface is textured, and the molten polylactide composition is applied to the treated tool surface under conditions effective to transfer the texture of the treated tool surface to the polylactide film to provide a matte finish on at lease one surface of the film.

A twenty fifth method is provided that can be a version of the twenty fourth method. In the twenty fifth method, the structure on the surface of the polylactide film has an Ra of at least 1.25 microns.

A first film is provided wherein the first film is the product of any of the first to the twenty fifth methods.

A first article is provided that includes the first film. The first article can be a disposable garment, and the disposable garment can be a diaper.

A first tape is provided that includes the first film, the first film includes first and second major surfaces and a layer of adhesive on at least one of the major surfaces.

Additional embodiments of the invention are described in the following non-limiting Examples.

### EXAMPLES

The following Examples are set forth to describe additional features and embodiments of the invention. All parts are by weight unless otherwise indicated.

### Example 1

A semi-crystalline polylactic acid film was prepared using a polylactic acid (PLA) polymer (designated as 4032D from Natureworks LLC, Minnetonka, MN) and the following procedure. A 40-mm 10-zone twin screw extruder was used to melt and extrude the PLA polymer, plasticizer, and nucleating agent to a positive displacement metering pump and then into a 25-centimeter (25-cm) wide conventional coat-hanger film die. The PLA polymer was dried for a minimum of 12 hours at 60°C to remove any moisture and then fed to the first zone of the extruder using a loss-in-weight feeder at a feed rate of 9.1 kilograms per hour (kg/hr). The first zone was water-cooled at approximately 25°C. The second zone of the extruder was set at 210°C while the remaining eight zones were set at 180°C. The die temperature was maintained at 180°C. The extruder speed was set at 200 revolutions per minute (RPM). An acetyl tri-n-butyl citrate plasticizer (CITROFLEX A-4, obtained from Vertellus Performance Materials, Greensboro, NC) was fed into zone 3 of the extruder using a gridmelter (Dynatec, Hendersonville, TN) at a feed rate of 14.6% by weight based on the final extruded composition. The extrudate from the extruder was deposited vertically downward into a nip consisting of a 48-cm diameter temperature-controlled matte finish treated steel tool roll (103°C) on one side and a 20-cm diameter chill (cooling) roll on the opposite side. A nip force of 60 N per lineal cm was used.

The treated tool roll was prepared according to the following procedure. A solution of fluorochemical - pentadecylphosphonic acid (C₁₅H₂₄F₉O₃P) in isopropyl alcohol at a concentration of 0.1 % was prepared. The tool roll was thoroughly cleaned with an ethyl acetate solvent and then the fluorochemical solution was applied by flood coating the solution to the outer surface of the tool roll using approximately 0.3 liters of the fluorochemical solution. The roll was allowed to air dry overnight.

A continuous silicone rubber belt was wrapped around the cooling roll (approximately 180 degrees of wrap) to aid in the extrusion process. The inner surface (the surface not in contact with the extrudate) of the belt was cooled with two steel rolls at a setpoint of 20°C. The extrudate remained in contact with the belt and tool roll for approximately 180 degrees of the tool roll circumference measured from the point of initial extrudate deposition. The cooled extruded film was then separated from the belt, and remained in contact with the tool roll for an additional approximate 60 degrees of wrap before being wound into a continuous roll. The film was pulled from the tool roll at 9.1 meters/minute (m/min) using a driven peel-off rubber coated roll that was slightly oversped relative to the tool roll speed. The tool roll was prepared by sandblasting a chrome-plated steel roll to achieve an average Ra roughness of 5.9 microns Film windup speed was adjusted to achieve a film thickness of approximately 65 microns.

The crystallinity of the film was measured using a TA Instruments Q200 Differential Scanning Colorimeter. A sample size of approximately 10 mg was heated from 0° to 220°C at 10°C/min. The representative initial crystalline enthalpy was taken as the difference between the cold crystallization and melting enthalpies. The degree of crystallinity was calculated using 100 Joules/gram as a standard for 100% crystalline PLA. The test results are shown in Table 1 below.

### Example 2

A semi-crystalline polylactic acid film was prepared as in Example 1 except talc (UltraTalc 609 talc, obtained from Specialty Minerals, Bethlehem, PA) was added as a nucleating agent to increase the crystallinity of the film. The talc was fed to the feed throat of the extruder using a loss-in-weight feeder at a rate to achieve a 2.5% by weight of talc based on the final extruded composition. The feed rate of the PLA was 9.3 kilograms per hour (kg/hr).The crystallinity of the film was measured as in Example 1 above and the results are shown in Table 1 below.

### Comparative Example C1

A semi-crystalline polylactic acid film was prepared as in Example 1 except that the matte finish steel tool roll was not pre-treated with fluorochemical solution. The crystallinity of the film was measured as in Example 1 above and the results are shown in Table 1 below. The film had a very low level of crystallinity as compared with the films of Examples 1 and 2.

### Comparative Example C2

A semi-crystalline polylactic acid film was prepared as in Example 2 except that the matte finish steel tool roll was not pre-treated with fluorochemical solution. The crystallinity of the film was measured as in Example 1 above and the results are shown in Table 1 below. Even though this film was nucleated it had a lower level of crystallinity than the films of Examples 1 and 2.

### Example 3

A semi-crystalline polylactic acid film was prepared as in Example 1 except the tool roll was treated with a 0.1 % solution of fluorochemical benzotriazole of formula (I) (C₁₇H₁₆F₉N₃O₂) in isopropyl alcohol using the same procedure as in Example 1. The second zone of the extruder was set at 200°C with the remaining eight zones set at 200°C. The die temperature was maintained at 220°C. The extruder speed was set at 200 revolutions per minute (RPM). The inner surface of the belt was cooled at a set point of 15°C. The crystallinity of the film was measured as in Example 1 above and the results are shown in Table 1 below.

### Example 4

A semi-crystalline polylactic acid film was prepared as in Example 3 except that a nucleating agent (UltraTalc 609 talc, obtained from Specialty Minerals, Bethlehem, PA) was used to increase the crystallinity of the film. The talc was fed to the feed throat of the extruder using a loss-in-weight feeder at a rate to achieve a 2.5% by weight of talc based on the final extruded composition. The feed rate of the PLA was 9.1 kilograms per hour (kg/hr). The crystallinity of the film was measured as in Example 1 above and the results are shown in Table 1 below.

### Comparative Example C3

A semi-crystalline polylactic acid film was prepared as in Example 3 except that the matte finish steel tool roll was not pre-treated with the fluorochemical benzotriazole of formula (I) (C₁₇H₁₆F₉N₃O₂). The crystallinity of the film was measured as in Example 1 above and the results are shown in Table 1 below. The film had a very low level of crystallinity as compared with the films of Examples 1 - 4.

### Comparative Example C4

A semi-crystalline polylactic acid film was prepared as in Example 4 except that the matte finish steel tool roll was not pre-treated with the fluorochemical benzotriazole of formula (I) (C₁₇H₁₆F₉N₃O₂). The crystallinity of the film was measured as in Example 1 above and the results are shown in Table 1 below. Even though this film was nucleated it had a lower level of crystallinity than the films of Examples 3 and 4.

**Table 1**

| **Example** | **Treated Tool Roll (Y/N)** | **Nucleated (Y/N)** | **Crystallinity (wt-%)** |
|---|---|---|---|
| 1 | Y | N | 26.5 |
| 2 | Y | Y | 29.2 |
| C1 | N | N | 4.1 |
| C2 | N | Y | 23.4 |
| 3 | Y | N | 17.0 |
| 4 | Y | Y | 4.9 |
| C3 | N | N | 1.8 |
| C4 | N | Y | 2.6 |

While the features of various embodiments have been described in detail, it will be understood that the present invention is not intended to be unduly limited by the described embodiments and examples set forth herein. Various modifications and alterations to the described embodiments will become apparent to those of ordinary skill in the art without departing from the scope and spirit of the invention.

## Claims

1. A method for forming a polylactide film comprising the steps of:
(a) providing a treated tool surface comprising a surface of a quench roll and a release coating, the treated tool surface being at a predetermined temperature of about the glass transition temperature of the polylactide or higher;
(b) extruding a molten polylactide composition onto the treated tool surface to create a polylactide film, the film being at least partially crystalline, and wherein the crystallinity of the polylactide film is enhanced due to exposure of the molten polylactide composition to the treated tool surface at the predetermined temperature; and
(c) removing the polylactide film from the treated tool surface.

2. The method of claim 1 wherein the predetermined temperature of the treated tool surface is in the range from 85°C to 130°C.

3. The method of any one of claims 1 or 2 wherein the release coating is selected from the group consisting of fluorochemical benzotriazole, fluorinated phosphonic acid and combinations of the foregoing.

4. The method of any one of claims 1 to 3 wherein the fluorochemical benzotriazole has the formula: 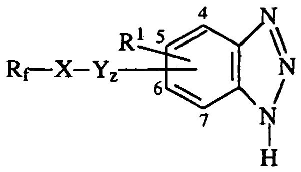 wherein R_{f} is Cₙ F₂ₙ₊₁ -(CH₂)ₘ-, wherein n is 1 to 22 and m is an integer of 0 or higher;
X is -CO₂-, -SO₃-, -CONH-, -O-, -S- a covalent bond, -SO₂NR-, or -NR-, wherein R is H or C₁ to C₅ alkylene;
Y is -CH₂- wherein z is 0 or 1; and
R ¹ is H, lower alkyl or R_{f}-X-Y_{z}-
with the provisos that when X is -S-, or -O-, m is 0, and z is 0, n is ≥ 7 and when X is a covalent bond, m or z is at least 1.

5. The method of any one of claims 1 to 4 wherein the fluorochemical benzotriazole has the formula: 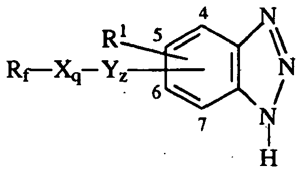 wherein
R_{f} is Cₙ F₂ₙ₊₁ -(CH₂)ₘ-, n is 1 to 22, m is an integer of 0 or higher;
X is -CO₂-, -SO₃-, -S-, -O-, -CONH-, a covalent bond, -SO₂NR-, or -NR-, wherein R is H or C 1 to C₅ alkylene, and q is 0 or 1;
Y is C₁ - C₄ alkylene, and z is 0 or 1; and
R¹ is H, lower alkyl, or R_{f}-X-Y_{z}.

6. The method of any one of claims 1 to 5, wherein the fluorinated phosphonic acid has the formula: 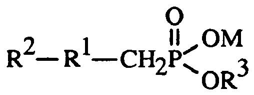 wherein:
R¹ is a straight chain alkylene group having from 5 to 21 carbon atoms, wherein a methylene moiety may be replaced by an oxygen atom at a single site, or at multiple sites along the methylene chain;
R² is a perfluoroalkyl group having from 4 to 10 carbon atoms;
R³ is hydrogen, an alkali metal cation, or an alkyl group having from 1 to 6 carbon atoms; and
M is hydrogen or an alkali metal cation,
with the proviso that if R¹ is an unsubstituted straight chain alkylene group, then the sum of carbon atoms in R¹ and R² combined is at least 10.

7. The method of any one of claims 1 to 6, wherein the fluorinated phosphonic acid is selected from the group consisting of CF₃(CF₂)₃(CH₂)₈PO₃H₂, CF₃(CF₂)₃(CH₂)₁₁PO₃H₂, CF₃(CF₂)₃(CH₂)₂₂PO₃H₂.

8. The method of any one of claims 1 to 7 wherein the molten polylactide composition comprises no nucleating agent.

9. The method of any one of claims 1 to 7 wherein the molten polylactide composition comprises at least one nucleating agent.

10. The method of claim 9 wherein the at least one nucleating agent is selected from the group consisting of talc, zinc oxide, sodium salt of saccharin, calcium, silicate, sodium benzoate, calcium titanate, boron nitride, copper phthalocyanine, phthalocyanine and combinations of two or more of the foregoing.

11. The method of any one of claims 1 to 9 wherein the molten polylactide composition comprises at least one plasticizer selected from the group consisting of alkyl phosphate esters, dialkylether diesters, tricarboxylic esters, epoxidized oils and esters, polyesters, polyglycol diesters, alkyl alkylether diesters, aliphatic diesters, alkylether monoesters, citrate esters, dicarboxylic esters, vegetable oils and their derivatives, esters of glycerine and combinations of two or more of the foregoing.

12. The method of any one of claims 1 to 11 wherein the polylactide film comprises polylactide having no greater than 40 wt-% crystallinity.

13. The method of any one of claims 1 to 12 wherein the treated tool surface is textured, and the molten polylactide composition is applied to the treated tool surface under conditions effective to transfer the texture of the treated tool surface to the polylactide film to provide a matte finish on at least one surface of the film.

14. The method of claim 13 wherein the structure on the surface of the polylactide film has an Ra of at least 1.25 microns.

## Patentansprüche

1. Verfahren zur Bildung einer Polylactidfolie, bei dem man:
(a) eine behandelte Werkzeugoberfläche, die eine Oberfläche einer Abschreckwalze und eine Trennbeschichtung umfasst, bereitstellt, wobei die behandelte Werkzeugoberfläche sich bei einer vorbestimmten Temperatur von etwa der Glasübergangstemperatur des Polylactids oder darüber befindet;
(b) eine schmelzflüssige Polylactidzusammensetzung auf die behandelte Werkzeugoberfläche extrudiert, wobei man eine zumindest teilweise kristalline Polylactidfolie erhält, wobei die Kristallinität der Polylactidfolie aufgrund der Exposition der schmelzflüssigen Polylactidzusammensetzung gegenüber der behandelten Werkzeugoberfläche bei der vorbestimmten Temperatur erhöht wird; und
(c) die Polylactidfolie von der behandelten Werkzeugoberfläche entfernt.

2. Verfahren nach Anspruch 1, bei dem die vorbestimmte Temperatur der behandelten Werkzeugoberfläche im Bereich von 85°C bis 130°C liegt.

3. Verfahren nach einem der Ansprüche 1 oder 2, bei dem man die Trennbeschichtung aus der Gruppe bestehend aus fluorchemischem Benzotriazol, fluorierter Phosphonsäure und Kombinationen davon auswählt.

4. Verfahren nach einem der Ansprüche 1 bis 3, bei dem das fluorchemische Benzotriazol die folgende Formel aufweist: 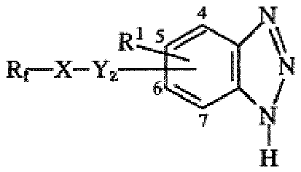 wobei R_{f} für CₙF₂ₙ₊₁-(CH₂)ₘ- steht, wobei n für 1 bis 22 steht und m für eine ganze Zahl mit einem Wert von 0 oder mehr steht;
X für -CO₂-, -SO₃-, -CONH-, -O-, -S-, eine kovalente Bindung, -SO₂NR-oder -NR- steht, wobei R für H oder C₁- bis C₅-Alkylen steht;
Y für -CH₂- steht, wobei z für 0 oder 1 steht; und
R¹ für H, Niederalkyl oder R_{f}-X-Y_{z}- steht;
mit den Maßgaben, dass dann, wenn X für -S- oder -O- steht, m für 0 steht und z für 0 steht, n ≥ 7 ist, und dann, wenn X für eine kovalente Bindung steht, m oder z mindestens 1 ist.

5. Verfahren nach einem der Ansprüche 1 bis 4, bei dem das fluorchemische Benzotriazol die folgende Formel aufweist: 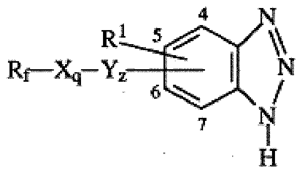 wobei R_{f} für CₙF₂ₙ₊₁-(CH₂)ₘ- steht, wobei n für 1 bis 22 steht und m für eine ganze Zahl mit einem Wert von 0 oder mehr steht;
X für -CO₂-, -SO₃-, -S-, -O-, -CONH-, eine kovalente Bindung, -SO₂NR-oder -NR- steht, wobei R für H oder C₁- bis C₅-Alkylen steht, und q für 0 oder 1 steht;
Y für C₁-C₄-Alkylen steht und z für 0 oder 1 steht; und
R¹ für H, Niederalkyl oder R_{f}-X-Y_{z} steht.

6. Verfahren nach einem der Ansprüche 1 bis 5, bei dem die fluorierte Phosphonsäure die folgende Formel aufweist: 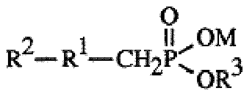 wobei:
R¹ für eine geradkettige Alkylengruppe mit 5 bis 21 Kohlenstoffatomen steht, wobei eine Methylengruppierung an einer einzigen Stelle oder an mehreren Stellen entlang der Methylenkette durch ein Sauerstoffatom ersetzt sein kann;
R² für eine Perfluoralkylgruppe mit 4 bis 10 Kohlenstoffatomen steht;
R³ für Wasserstoff, ein Alkalimetallkation oder eine Alkylgruppe mit 1 bis 6 Kohlenstoffatomen steht; und
M für Wasserstoff oder ein Alkalimetallkation steht;
mit der Maßgabe, dass dann, wenn R¹ für eine unsubstituierte geradkettige Alkylengruppe steht, die Summe der Kohlenstoffatome in R¹ und R² zusammengenommen mindestens 10 beträgt.

7. Verfahren nach einem der Ansprüche 1 bis 6, bei dem man die fluorierte Phosphonsäure aus der Gruppe bestehend aus CF₃(CF₂)₃(CH₂)₈PO₃H₂, CF₃(CF₂)₃(CH₂)₁₁PO₃H₂ und CF₃(CF₂)₃(CH₂)₂₂PO₃H₂ auswählt.

8. Verfahren nach einem der Ansprüche 1 bis 7, bei dem die schmelzflüssige Polylactidzusammensetzung kein Nukleierungsmittel umfasst.

9. Verfahren nach einem der Ansprüche 1 bis 7, bei dem die schmelzflüssige Polylactidzusammensetzung mindestens ein Nukleierungsmittel umfasst.

10. Verfahren nach Anspruch 9, bei dem man das mindestens eine Nukleierungsmittel aus der Gruppe bestehend aus Talk, Zinkoxid, Natriumsalz von Saccharin, Calciumsilicat, Natriumbenzoat, Calciumtitanat, Bornitrid, Kupferphthalocyanin, Phthalocyanin und Kombinationen von zwei oder mehr davon auswählt.

11. Verfahren nach einem der Ansprüche 1 bis 9, bei dem die schmelzflüssige Polylactidzusammensetzung mindestens einen Weichmacher aus der Gruppe bestehend aus Alkylphosphatestern, Dialkyletherdiestern, Tricarbonsäureestern, epoxidierten Ölen und Estern, Polyestern, Polyglykoldiestern, Alkylalkyletherdiestern, aliphatischen Diestern, Alkylethermonoestern, Citratestern, Dicarbonsäureestern, pflanzlichen Ölen und Derivaten davon, Estern von Glycerin und Kombinationen von zwei oder mehr davon umfasst.

12. Verfahren nach einem der Ansprüche 1 bis 11, bei dem die Polylactidfolie Polylactid mit höchstens 40 Gew.-% Kristallinität umfasst.

13. Verfahren nach einem der Ansprüche 1 bis 12, bei dem die behandelte Werkzeugoberfläche texturiert ist und die schmelzflüssige Polylactidzusammensetzung unter solchen Bedingungen auf die behandelte Werkzeugoberfläche aufgebracht wird, dass die Textur der behandelten Werkzeugoberfläche auf die Polylactidfolie übertragen wird, wodurch auf mindestens einer Oberfläche der Folie eine matte Oberflächenbeschaffenheit bereitgestellt wird.

14. Verfahren nach Anspruch 13, bei dem die Struktur auf der Oberfläche der Polylactidfolie einen Ra-Wert von mindestens 1,25 Mikron aufweist.

## Revendications

1. Procédé de formation d'un film de polylactide, consistant à :
(a) fournir une surface d'outil traitée comprenant une surface d'un rouleau de refroidissement rapide et un revêtement anti-adhésif, la surface d'outil traitée étant à une température prédéterminée approximativement égale à la température de transition vitreuse du polylactide ou supérieure à celle-ci ;
(b) extruder une composition de polylactide fondue sur la surface d'outil traitée pour former un film de polylactide, le film étant au moins en partie cristallin, et la cristallinité du film de polylactide étant augmentée en raison de l'exposition de la composition de polylactide fondue à la surface d'outil traitée à la température prédéterminée ; et
(c) retirer le film de polylactide de la surface d'outil traitée.

2. Procédé selon la revendication 1, dans lequel la température prédéterminée de la surface d'outil traitée est de 85 °C à 130 °C.

3. Procédé selon la revendication 1 ou 2, dans lequel le revêtement anti-adhésif est sélectionné dans le groupe constitué du benzotriazole fluorochimique, de l'acide phosphonique fluoré, et de combinaisons de ceux-ci.

4. Procédé selon l'une quelconque des revendications 1 à 3, dans lequel le benzotriazole fluorochimique a la formule : 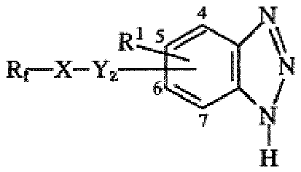 dans laquelle
R_{f} est CₙF₂ₙ₊₁-(CH₂)ₘ-, n valant de 1 à 22 et m étant un nombre entier valant 0 ou plus ;
X est -CO₂-, -SO₃-, -CONH-, -O-, -S-, une liaison covalente, -SO₂NR-, ou -NR-, R étant un atome d'hydrogène ou un groupe alkylène C₁-C₅ ;
Y est -CH₂-, z valant 0 ou 1 ; et
R¹ est un atome d'hydrogène, un groupe alkyle inférieur ou R_{f}-X-Y_{z}-sous réserves que quand X est -S-, ou -O-, m soit égal à 0, z soit égal à 0, et n soit supérieur ou égal à 7, et que quand X est une liaison covalente, m ou z soit au moins égal à 1.

5. Procédé selon l'une quelconque des revendications 1 à 4, dans lequel le benzotriazole fluorochimique a la formule : 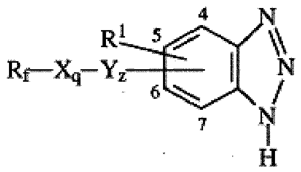 dans laquelle
R_{f} est CₙF₂ₙ₊₁-(CH₂)ₘ-, n valant de 1 à 22 et m étant un nombre entier valant 0 ou plus ;
X est -CO₂-, -SO₃-, -S-, -O-, -CONH-, une liaison covalente, -SO₂NR-, ou -NR-, R étant un atome d'hydrogène ou un groupe alkylène C₁-C₅, et q valant 0 ou 1 ;
Y est un groupe alkylène C₁-C₄, et z vaut 0 ou 1 ; et
R¹ est un atome d'hydrogène, un groupe alkyle inférieur ou R_{f}-X-Y_{z}-.

6. Procédé selon l'une quelconque des revendications 1 à 5, dans lequel l'acide phosphonique fluoré a la formule : 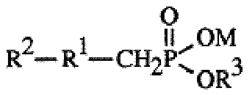 dans laquelle
R¹ est un groupe alkylène à chaîne linéaire comportant de 5 à 21 atomes de carbone, dans lequel une fraction méthylène peut être remplacée par un atome d'oxygène sur un seul site, ou sur plusieurs sites le long de la chaîne méthylène ;
R² est un groupe perfluoroalkyle comportant de 4 à 10 atomes de carbone ;
R³ est un atome d'hydrogène, un cation de métal alcalin, ou un groupe alkyle comportant de 1 à 6 atomes de carbone ; et
M est un atome d'hydrogène ou un cation de métal alcalin,
sous réserve que si R¹ est un groupe alkylène à chaîne linéaire non substitué, la somme des atomes de carbone dans R¹ et R² combinés soit d'au moins 10.

7. Procédé selon l'une quelconque des revendications 1 à 6, dans lequel l'acide phosphonique fluoré est sélectionné dans le groupe constitué de CF₃(CF₂)₃(CH₂)₈PO₃H₂, CF₃(CF₂)₃(CH₂)₁₁PO₃H₂, CF₃(CF₂)₃(CH₂)₂₂PO₃H₂.

8. Procédé selon l'une quelconque des revendications 1 à 7, dans lequel la composition de polylactide fondue ne contient pas d'agent de nucléation.

9. Procédé selon l'une quelconque des revendications 1 à 7, dans lequel la composition de polylactide fondue contient au moins un agent de nucléation.

10. Procédé selon la revendication 9, dans lequel ledit au moins un agent de nucléation est sélectionné dans le groupe constitué du talc, de l'oxyde de zinc, du sel sodique de saccharine, du silicate de calcium, du benzoate de sodium, du titanate de calcium, du nitrure de bore, de la phtalocyanine de cuivre, de la phtalocyanine, et de combinaisons de deux ou plusieurs de ceux-ci.

11. Procédé selon l'une quelconque des revendications 1 à 9, dans lequel la composition de polylactide fondue comprend au moins un plastifiant sélectionné dans le groupe constitué des esters d'alkylphosphates, des diesters de dialkyléther, des esters tricarboxyliques, des huiles et esters époxydés, des polyesters, des diesters de polyglycols, des diesters d'alkylalkyléther, des diesters aliphatiques, des monoesters d'alkyléther, des esters de citrates, des esters dicarboxyliques, des huiles végétales et de leurs dérivés, des esters de glycérine, et de combinaisons de deux ou plusieurs de ceux-ci.

12. Procédé selon l'une quelconque des revendications 1 à 11, dans lequel le film de polylactide comprend un polylactide ayant une cristallinité qui n'est pas supérieure à 40 % en poids.

13. Procédé selon l'une quelconque des revendications 1 à 12, dans lequel la surface d'outil traitée est texturée, et la composition de polylactide fondue est appliquée sur la surface d'outil traitée dans des conditions efficaces pour transférer la texture de la surface d'outil traitée au film de polylactide pour produire un fini mat sur au moins une surface du film.

14. Procédé selon la revendication 13, dans lequel la structure sur la surface du film de polylactide a une valeur Ra d'au moins 1,25 micron.
